# EUROPÄISCHE PATENTSCHRIFT

(11) **EP 2 343 793 B1**
(45) Veröffentlichungstag und Bekanntmachung des Hinweises auf die Patenterteilung: **16.09.2020**
(21) Anmeldenummer: 10150334.0
(22) Anmeldetag: 08.01.2010
(51) Int. Cl.: H02K 5/14, H02K 5/15, H02K 5/16, H02K 5/167, H02K 7/08, H02K 15/16

(54) **Anschlussmodul für Gleichstrommotoren**
Connection module for direct current motors
Module de raccordement pour moteurs à courant continu

(43) Veröffentlichungstag der Anmeldung: 13.07.2011
(73) Patentinhaber: maxon international ag, 6072 Sachseln (CH)
(72) Erfinder: Teimel, Arnold, 6074, Giswil (CH)
(74) Vertreter: Grünecker Patent- und Rechtsanwälte PartG mbB

(56) Entgegenhaltungen:
- EP-A1- 0 915 555
- EP-A1- 1 454 710
- DE-A1- 3 635 987
- DE-A1-102004 011 666
- DE-A1-102005 030 217
- DE-A1-102007 049 209
- DE-U1- 20 302 174
- JP-A- 2000 324 761
- JP-A- 2003 189 531
- US-A- 3 760 209
- US-A- 4 076 197

## Beschreibung

Die vorliegende Erfindung betrifft einen Gleichstrommotor mit einem Motorgehäuse und mindestens einem an dem Motorgehäuse anbringbaren Anschlussmodul, das Befestigungsmöglichkeiten zur Befestigung des Gleichstrommotors an eine Einbaustelle aufweist, wobei das Motorgehäuse eine stirnseitige Zentrierungserhöhung aufweist, welche mit einer Zentrierungsausnehmung auf dem Anschlussmodul zusammenwirkt.

Bei bisher üblichen Gleichstromkleinmotoren besteht das Motorgehäuse häufig aus einem Teil, das die Funktionen Außenrückschluss für das Feld des Permanentmagneten und Anschlussflansch mit einem definierten Bohrbild vereint. Üblicherweise wird das Motorgehäuse aus dem Vollen gedreht. Bei etwas geringeren Präzisionsanforderungen ist es auch bekannt, das Motorgehäuse mittels Tiefziehtechnik herzustellen und die Anschlussgewinde nachzuarbeiten.

Ferner sind auch Konstruktionen für Motorgehäuse bekannt, bei denen der Außenrückschluss für das Feld des Permanentmagneten und der Anschlussflansch mit dem definierten Bohrbild separate Teile sind, die durch Pressen, Schweißen, Schrauben, Verstiften oder ähnliche Verbindungsarten in einer festen Winkellage miteinander verbunden sind.

All diese Motorgehäuse haben eine festgelegte Konstruktion bzw. einen festgelegten Aufbau. Wird von einem Kunden ein anderes Bohrbild zur Befestigung des Motors an der vorgesehenen Stelle benötigt, so bedeutet dies, dass der Motor von Grund auf neu aufgebaut werden muss, da entweder das Motorgehäuse entsprechend angepasst werden muss oder der Anschlussflansch an die Kundenspezifikation angepasst werden muss.

Um derartige Modifikationen zu realisieren, ist es daher bereits bekannt, an die Stirnseite des Motorgehäuses eine Adapterplatte anzubauen, die das vom Kunden gewünschte Bohrbild aufweist. Dies ermöglicht eine schnellere Lieferfähigkeit, da ein bereits fertiger Motor bezogen werden kann, an den nur noch die entsprechende Adapterplatte angebaut werden muss. Nachteilig hierbei sind der zusätzliche Montageaufwand zur Befestigung der Adapterplatte, die zusätzliche Baulänge durch die Adapterplatte und die Kosten für die zusätzliche Adapterplatte.

US 4,227,101 zeigt einen Schrittmotor mit einem Adapterring. Der Adapterring dient zum Befestigen des Schrittmotors an einer Einbaustelle und weist dazu ein Anschlussbohrbild auf. Das Motorgehäuse des Schrittmotors weist an seiner Stirnseite einen Zentriervorsprung sowie Gewindebohrungen zur Verbindung mit dem Adapterring auf. Der Adapterring ist mit einer mittigen Bohrung versehen und weist an seinem Umfang drei bogenförmige Langlöcher auf. Der Adapterring wird auf das Motorgehäuse aufgesteckt, so dass der Zentriervorsprung des Motorgehäuses durch die Bohrung des Adapterringes hindurchragt. In den bogenförmigen Langlöchern des Adapterrings sind Schrauben angebracht, die in die Gewindebohrungen des Motorgehäuses eingesteckt und leicht angezogen werden. In dieser Montageposition ist der Adapterring also mittels der Schrauben an dem Motorgehäuse locker befestigt. In der Montageposition kann der Adapterring noch verdreht werden, soweit dies die Langlöcher zulassen. Der Adapterring kann also eingeschränkt verdreht werden. Dadurch kann die Motorwelle in Bezug auf das Anschlussbohrbild in dem Adapterring in die gewünschte Position gebracht werden. Ist dies geschehen, so werden die Schrauben in den Langlöchern fest angezogen, so dass der Adapterring im montierten Zustand fest mit dem Motorgehäuse verbunden ist. Da der Adapterring nur eingeschränkt verdreht werden kann, sind nur gewisse Positionen des Anschlussbohrbildes einstellbar.

Aus DE 102005030217 A1 ist ein Elektromotor mit Adapterelement bekannt. Der Adapterring umschließt eine äußere Mantelfläche des Elektromotorgehäuses. Für einen Formschluss zwischen Motorgehäuse und Adapter sind in die Mantelfläche des Elektromotorgehäuses radiale Aussparungen eingebracht, in die radial nach Innen ragende Befestigungsstege des Adapters eingreifen. In Umfangsrichtung bleiben zwischen den radialen Aussparungen Bereiche des Elektromotorgehäuses unverformt bestehen, so dass diese in Umfangsrichtung einen Anschlag für die Befestigungsstege bilden.

Aus DE 20302174 U1 ist ein Elektromotor mit einem in das Gehäuse des Elektromotors eingepressten Anschlussmodul bekannt. Das Anschlussmodul befindet sich innerhalb des Gehäuses und trägt den Gehäusedeckel, der durch eine Deckplatte abgeschlossen ist.

In DE 102004011666 A1 ist ein Linearaktuator beschrieben, der einen Schrittmotor sowie ein daran angesetztes Führungsgehäuse umfasst. Das Gehäuse des Schrittmotors umfasst einen Befestigungsflansch, der in einen sogenannten Zentrierungsrücksprung des Führungsgehäuses eingreift. Das Führungsgehäuse ist an dem Gehäuse des Schrittmotors mittels Befestigungsschrauben befestigt, die durch Bohrlöcher des Führungsgehäuses eingesteckt und in Sacklöcher des Gehäuses eingeschraubt werden.

Die DE 36 35 987 A1 zeigt eine elektrische Maschine mit einem zylindrischen Gehäuse, an dessen Stirnseiten Lagerschilde befestigt sind. Dazu sind die Ränder des zylindrischen Gehäuses als Zentrierbuchsen ausgebildet, die Ränder der Lagerschilde als Zentriermäntel, die spielfrei in die Zentrierbuchsen des Gehäuses eingepasst sind.

Die EP 09 15 555 A1 offenbart ein Gehäuse für einen leisen Elektromotor, auf dessen Mantelfläche ein Befestigungsflansch angebracht ist.

In der US 4,076,197 ist ein Motorbefestigungssystem offenbart, bei dem an der Mantelfläche eines zylindrischen Motorgehäuses Befestigungsarme angebracht sind. Die Befestigungsarme können direkt am Motorgehäuse angebracht sein oder an einer Befestigungsschelle, die am Motorgehäuse befestigt wird.

DE 690 25 317 C2 beschreibt einen Elektrokleinmotor mit einem Montageflansch. Der Elektrokleinmotor kann mit dem Montageflansch an der gewünschten Einbaustelle befestigt werden. Der Montageflansch weist einen becherförmigen Abschnitt auf, mit dem er auf die Umfangsfläche des Motorgehäuses des Elektrokleinmotors aufgesteckt ist. In dieser Position werden der Montageflansch und das Motorgehäuse miteinander verklebt. Nachteilig hierbei ist, dass der Elektrokleinmotor relativ viel Bauraum benötigt.

Ein weiterer Nachteil besteht darin, dass bei bürstenbehafteten Gleichstrommotoren in der Regel der Bürstendeckel relativ zum Stator mit den im Stator montierten Permanentmagneten verdreht wird, um die Kommutierung einzustellen. Die Winkellage der elektrischen Anschlüsse in Bezug auf das Bohrbild des Anschlussflansches ist daher nicht definiert. Von Motor zu Motor können Unterschiede von bis zu ± 25° auftreten. Dies kann vor allem bei Anwendungen mit beengtem Bauraum oder wenn mehrere Motoren sehr eng nebeneinander verbaut werden müssen, Probleme bereiten.

Es ist daher die Aufgabe der vorliegenden Erfindung, einen Gleichstrommotor bereitzustellen, der die Nachteile der aus dem Stand der Technik bekannten Lösungen vermeidet und insbesondere kompakt ist, flexibel an Kundenanforderungen anpassbar ist und auch bei geringem Bauraum einfach einbaubar ist.

Hierzu ist erfindungsgemäß nach Anspruch 1 vorgesehen, dass das Anschlussmodul in einem Montagezustand auf dem Motorgehäuse frei in eine beliebige Position verdrehbar ist und im montierten Zustand in dieser beliebigen Position verdrehsicher mit dem Motorgehäuse verbunden ist, wobei ein Lager für die Motorwelle des Gleichstrommotors an der Stirnseite des Motorgehäuse angeordnet ist, zumindest teilweise über die Stirnseite des Motorgehäuses übersteht und die Zentrierungserhöhung ausbildet, wobei das Anschlussmodul auf das Lager aufgesteckt ist und dass das Motorgehäuse einen Motorgehäuseboden aufweist, in dem ein Absatz ausgebildet ist und das Anschlussmodul eine vorstehende Rippe aufweist, die in dem Absatz zu liegen kommt.

Auf die Stirnseite des Motorgehäuses wird das Anschlussmodul aufgebracht, an dem die Befestigungsmöglichkeiten zum Befestigen des Motors an der vorgesehenen Einbaustelle vorgesehen sind. Das Anschlussmodul weist also die Funktion eines Anschlussflansches auf. Das Anschlussmodul wird auf die Stirnseite des Gleichstrommotors aufgesteckt, so dass die Zentrierungserhöhung bzw. die Zentrierungsausnehmung des Anschlussmoduls in die Zentrierungsausnehmung des Gleichstrommotors eingreift bzw. die Zentrierungserhöhung des Gleichstrommotors umgibt. Da das Anschlussmodul in dem Montagezustand frei verdrehbar ist, kann es in eine beliebige Position gedreht werden. In dieser Position wird das Anschlussmodul fest mit dem Motorgehäuse verbunden, so dass es im montierten Zustand verdrehsicher an dem Motorgehäuse angebracht ist. Das Anschlussmodul kann daher in einer beliebigen Position an dem Motorgehäuse befestigt werden. An der Stirnseite des Motorgehäuses sind keine Anschlussbohrungen angebracht. Die Wandstärke der Stirnseite des Gehäuses kann daher relativ dünn sein, so dass ein Gehäuse mit minimaler Länge realisiert werden kann. Dadurch wird der Gleichstrommotor kompakt und kostengünstig. Auf der Montagelinie für den Gleichstrommotor sind keine Varianten bezüglich der Anschlussgeometrie zu berücksichtigen. Die Montageeinrichtungen müssen daher nicht umgerüstet werden, es ist lediglich geringer Aufwand zur Montage des Gleichstrommotors nötig. Die kundenspezifische Anschlussgeometrie wird am fertig montierten Gleichstrommotor realisiert, indem ein entsprechendes Anschlussmodul aufgesetzt wird. Damit ergibt sich eine kurze Durchlaufzeit für kundenspezifische Modifikationen. Bei dem Gleichstrommotor kann es sich um einen bürstenbehafteten oder auch um einen bürstenlosen Gleichstrommotor handeln.

Durch das Lager für die Motorwelle des Gleichstrommotors, welches an der Stirnseite des Motorgehäuses angeordnet ist und zumindest teilweise über die Stirnseite des Motorgehäuses übersteht und die Zentrierungserhöhung ausbildet, ist das Anschlussmodul auf das Lager aufgesteckt. Hierdurch kann eine weitere Verkürzung der Baulänge des Motors erreicht werden. Das Anschlussmodul wird nur am Lager des Gleichstrommotors ausgerichtet. Damit wird eine verbesserte Präzision bzw. Toleranz erreicht.

Durch die vorstehende Rippe des Anschlussmoduls ist eine sehr einfache Befestigung des Gleichstrommotors möglich.

In noch einer weiteren Ausführungsform kann vorgesehen werden, dass das Anschlussmodul im montierten Zustand in einer präzisen Winkellage zu den elektrischen Anschlüssen des Gleichstrommotors angeordnet ist. Das ist vor allem bei bürstenbehafteten Gleichstrommotoren wichtig. Das Anschlussmodul wird auf den fertig montierten Motor aufgesetzt, an dem die Kommutierung bereits eingestellt ist. Die Winkellage der elektrischen Anschlüsse des Motors ist daher bei der Montage des Anschlussmoduls bereits festgelegt. Da das Anschlussmodul im Montagezustand frei verdrehbar ist und in eine beliebige Position gedreht werden kann, können die elektrischen Anschlüsse daher in Bezug auf die Befestigung des Gleichstrommotors, d.h. in Bezug auf das Anschlussmodul, in die gewünschte Position gebracht werden. Es ist daher eine gute Ausnutzung des Bauraums möglich, in den die Gleichstrommotoren eingebaut werden. Die Gleichstrommotoren können eng nebeneinander verbaut werden, da die Position der Anschlüsse bekannt ist.

Ferner kann vorgesehen werden, dass das Anschlussmodul ein Anschlussbohrbild zur Verbindung mit einer Anschlussstelle aufweist. Dadurch ist eine einfache Befestigung des Gleichstrommotors an der gewünschten Position mittels Verschrauben möglich.

Im Folgenden werden Ausführungsformen der Erfindung anhand von Zeichnungen näher erläutert. Es zeigen:
- Fig. 1: Explosionsdarstellung des Gleichstrommotors,
- Fig. 2: Ansicht des Gleichstrommotors von vorne, und
- Fig. 3: Schnitt durch die Vorderseite des Motorgehäuses des Gleichstrommotors mit dem daran angebrachten Anschlussmodul.

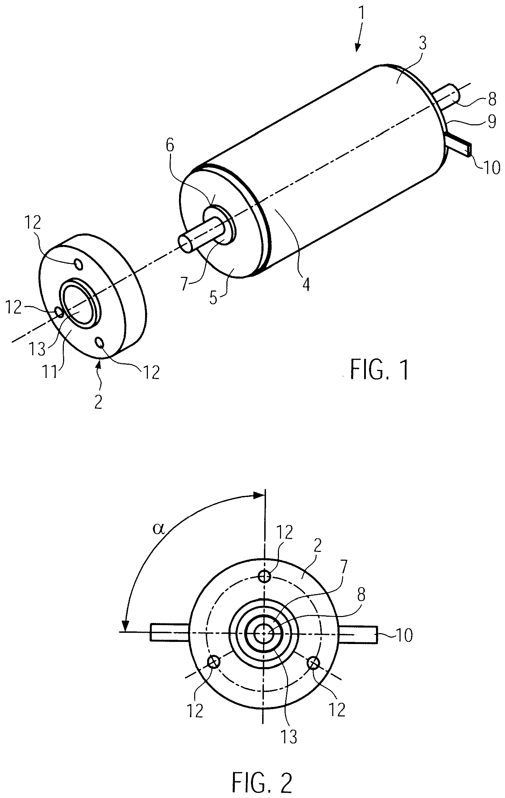

Fig. 1 zeigt eine Explosionsdarstellung des Gleichstrommotors 1. Der Gleichstrommotor kann als bürstenbehafteter Gleichstrommotor oder bürstenloser Gleichstrommotor ausgebildet sein. Im dargestellten Fall handelt es sich um einen bürstenbehafteten Gleichstrommotor. Der Gleichstrommotor 1 umfasst ein Motorgehäuse 3 und das Anschlussmodul 2. Das Motorgehäuse 3 ist vorzugsweise topfförmig ausgebildet. D.h., das Motorgehäuse 3 umfasst eine Mantelfläche 4, die einstückig mit einem Motorgehäuseboden 5 verbunden ist. In dem Motorgehäuseboden 5 ist ein Lagersitz 6 ausgebildet. In dem Lagersitz 6 ist ein Lager 7 angeordnet, in dem ein Ende der Motorwelle 8 gelagert ist.

Der Motorgehäuseboden 5 bildet somit eine Stirnseite des Motorgehäuses 3 aus. An der dem Motorgehäuseboden 5 gegenüberliegenden Stirnseite des Gleichstrommotors 1 ist das Motorgehäuse 3 offen. Dort ist ein Bürstendeckel 9 mit daran angebrachten elektrischen Anschlüssen 10 befestigt.

Der Lagersitz 6 an der Stirnseite bzw. an dem Motorgehäuseboden 5 des Motorgehäuses 3 des Gleichstrommotors 1 ist von außen zugänglich und so ausgebildet, dass seine Höhe geringer ist als die Höhe des Lagers 7, das in dem Lagersitz 6 montiert ist. Das Lager 7 steht also nach außen über den Motorgehäuseboden 5 vor und bildet eine Zentrierungserhöhung. Der Motorgehäuseboden 5 ist bis auf den Lagersitz 6 sehr einfach ausgebildet und weist insbesondere keine Anschlussbohrungen zum Befestigen des Gleichstrommotors 1 an einer Anschlussstelle auf.

Das Anschlussmodul 2 weist auf seiner Rückseite eine Zentrierungsausnehmung auf. Die Zentrierungsausnehmung ist in etwa kreisförmig, wobei der Außendurchmesser der Zentrierungsausnehmung etwas größer ist als der Außendurchmesser des Lagers 7. Das Anschlussmodul 2 wird koaxial zur Motorwelle 8 auf das Motorgehäuse 3 des Gleichstrommotors 1 aufgesteckt. Das Lager 7 ist dann in der Zentrierungsausnehmung des Anschlussmoduls 2 angeordnet und zentriert somit das Anschlussmodul 2 an dem Motorgehäuse 3. Da der Durchmesser der Zentrierungsausnehmung des Anschlussmoduls 2 etwas größer ist als der Außendurchmesser des Lagers 7, ist das Anschlussmodul 7 nach dem Aufstecken auf das Motorgehäuse 3 noch verdrehbar.

An seiner von dem Motorgehäuseboden 5 abgewandten Vorderseite 11 weist das Anschlussmodul 2 Befestigungsmöglichkeiten zur Befestigung des Gleichstrommotors 1 an der gewünschten Einbaustelle, z.B. in einem Pkw, auf. Im dargestellten Fall sind dazu Bohrungen 12 vorgesehen. Das durch die Bohrungen 12 ausgebildete Bohrbild entspricht den kundenspezifischen Anforderungen. Die Position der Bohrungen 12 wird also entsprechend den Kundenanforderungen festgelegt. Es ist auch möglich, andere Befestigungsmöglichkeiten, z.B. Befestigungsrippen, vorzusehen.

Das Anschlussmodul 12 ist fest mit dem Motorgehäuse 3 des Gleichstrommotors 1 verbunden. Beispielsweise kann das Anschlussmodul 2 durch Schweißen, Kleben, Pressen oder Schrumpfen mit dem Motorgehäuse 3 verbunden werden.

Fig. 2 zeigt den Gleichstrommotor 1 mit dem darauf angebrachten Anschlussmodul 2 aus Fig. 1 von vorne. Das Anschlussmodul 3 weist drei Bohrungen 12 auf, mittels derer der Gleichstrommotor 1 an der gewünschten Einbaustelle, beispielsweise in einem Kraftfahrzeug, angebracht werden kann. Das Anschlussmodul 2 ist ebenso wie das Motorgehäuse 3 des Gleichstrommotors 1 im Querschnitt rund, kann aber auch quadratische, dreieckige oder ovale Form haben mit Bohrungen außerhalb des Motordurchmessers, die eine Befestigung auch von der Rückseite erlauben, bei Einbaubedingungen, bei denen die Stirnseite nicht zugänglich ist. Mittig weist das Anschlussmodul 2 eine Bohrung 13 auf, die als Durchführung für die Motorwelle 8 dient. Der Durchmesser der Bohrung 13 ist größer als der Durchmesser der Motorwelle 8, so dass auch das Lager 7 zu sehen ist. Auf der Rückseite des Anschlussmoduls 2 ist diese Bohrung 13 im Durchmesser vergrößert und bildet die Zentrierungsaufnahme aus, die auf das Lager 7 aufgesteckt ist. Das Anschlussmodul 7 ist in einer präzisen Winkellage zu den elektrischen Anschlüssen 10 des Gleichstrommotors 1 auf dem Motorgehäuse 3 montiert. Der Winkel α zwischen den Bohrungen 12 und den elektrischen Anschlüssen 10 kann mit einer Genauigkeit von ca. ± 2° eingestellt werden.

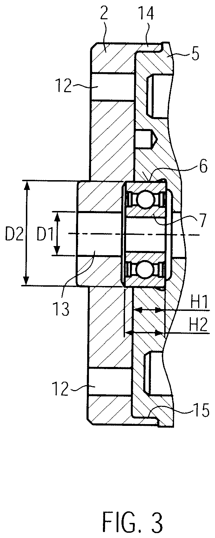

Fig. 3 zeigt einen Querschnitt durch die Vorderseite des Motorgehäuses 3, d.h. den Motorgehäuseboden 5, mit dem daran befestigten Anschlussmodul 2. Mittig in dem Motorgehäuseboden 5 ist der Lagersitz 6 ausgebildet. In dem Lagersitz 6 ist das Lager 7 für die Motorwelle angebracht. Die Motorwelle ist in Fig. 3 nicht dargestellt. Die Höhe H1 des Lagersitzes 6 ist geringer als die Höhe H2 des Lagers 7. Das Lager 7 steht daher über den Motorgehäuseboden 5 nach außen vor. Das Lager 7 bildet somit eine Zentrierungserhöhung aus. Um einen guten Halt des Lagers 7 in dem Motorgehäuse 3 zu ermöglichen, sollte die Höhe H1 des Lagersitzes 6 mindestens der Hälfte der Höhe H2 des Lagers 7 entsprechen. Es gilt also H1 ≥ 0,5 . H2. Allerdings sollte die Höhe H1 des Lagersitzes 6 auch nicht zu groß sein, so dass durch das Lager 7 noch eine Zentrierungserhöhung an der Stirnseite des Motorgehäusebodens 5 ausgebildet wird. Vorzugsweise liegt die Höhe H1 des Lagersitzes 6 daher in einem Bereich von etwa 2/3 bis 4/5 der Höhe H2 des Lagers.

Das Anschlussmodul 2 weist eine mittige Bohrung 13 auf. Die Bohrung 13 ist absatzweise ausgebildet. D.h., dass die Bohrung 13 entlang ihrer Längserstreckung durch zwei Bereiche mit unterschiedlichem Durchmesser gekennzeichnet ist. In dem der Rückseite des Anschlussmoduls 2 zugewandten Bereich weist die Bohrung 13 einen Durchmesser D2 auf. Dieser Durchmesser D2 entspricht in etwa dem Durchmesser des Lagers 7. In diesem Bereich ist die Bohrung 13 also als Zentrierungsausnehmung ausgebildet. Das Anschlussmodul 2 ist auf das Motorgehäuse 3 aufgesteckt, so dass der Bereich mit dem Durchmesser D2 der Bohrung 13 auf das Lager 7 aufgesteckt ist. In dem der Vorderseite des Anschlussmoduls 2 zugewandten Bereich ist der Durchmesser D1 der Bohrung 13 kleiner. Hier ist also ein Anschlag für das Lager 7 ausgebildet. Der Durchmesser D1 ist ausreichend groß, so dass die Motorwelle des Gleichstrommotors 2 nach außen austreten kann.

In dem Anschlussmodul 2 sind ferner die Befestigungsbohrungen 12 ausgebildet. Wie bereits beschrieben, sind sowohl das Motorgehäuse 3 als auch das Anschlussmodul 2 im Durchmesser im Wesentlichen kreisförmig. An seinem äußeren Ende, dem Motorgehäuseboden 5, ist ein kleiner Absatz 15 in dem Motorgehäuse 3 ausgebildet. Der Durchmesser des Motorgehäuses 3 in diesem Bereich ist also geringer als der Durchmesser des Motorgehäuses 3 im Mittelbereich. Das Anschlussmodul 2 weist an seinem Umfang eine vorstehende Rippe 14 auf, wobei der Innendurchmesser der Rippe 14 etwas größer ist als der Außendurchmesser der verjüngten Stelle 15 des Motorgehäusebodens 5. Die Rippe 14 des Anschlussmoduls 2 kommt daher in dem verjüngten Bereich 15 des Motorgehäusebodens 5 zu liegen, so dass eine zusätzliche Zentrierung und Stabilisierung des Anschlussmoduls 2 an dem Motorgehäuse 3 erreicht wird.

Im Folgenden wird die Montage des Anschlussmoduls 2 auf dem Motorgehäuse 3 des Gleichstrommotors 1 anhand der Zeichnungen kurz erläutert. Zunächst wird der Gleichstrommotor 1 montiert. Da es sich bei dem dargestellten Gleichstrommotor um einen bürstenbehafteten Gleichstrommotor handelt, wird zum Abschluss der Montage des Gleichstrommotors 1 der Bürstendeckel 9 mit den daran angebrachten elektrischen Anschlüssen 10 auf das Motorgehäuse 3 des Gleichstrommotors 1 aufgesetzt. Zur Einstellung der Kommutierung des Gleichstrommotors 1 wird der Bürstendeckel relativ zu dem in dem Motorgehäuse 3 angeordneten Stator mit den im Stator montierten Magneten verdreht. Der Bürstendeckel 9 wird dann in der gewünschten Position fixiert, so dass die Lage der elektrischen Anschlüsse 10 des Gleichstrommotors 1 festgelegt ist. Das Lager 7 wird in den Lagersitz 6 des Motorgehäuses 3 eingesetzt und steht über den Motorgehäuseboden 5 nach außen vor.

Im Anschluss daran wird das Anschlussmodul 2 auf die durch den Motorgehäuseboden 5 ausgebildete Stirnseite des Gleichstrommotors 1 aufgesteckt. Dabei wird die Motorwelle 8 durch die Bohrung 13, die mittig in dem Anschlussmodul 2 ausgebildet ist, geführt. Auf der Rückseite des Anschlussmoduls 2 ist die Bohrung 13 im Durchmesser vergrößert und bildet eine Zentrierungsausnehmung mit dem Durchmesser D2 aus. Der Durchmesser D2 der Zentrierungsausnehmung ist etwas größer als der Außendurchmesser des Lagers 7. Wie bereits beschrieben, steht das Lager 7 über die Stirnseite des Gleichstrommotors 1 vor. Dies liegt daran, dass die Höhe H1 des Lagersitzes 6, der in der Stirnseite bzw. dem Motorgehäuseboden 5 ausgebildet ist, geringer ist als die Höhe H2 des Lagers 7. Durch das Lager 7 und die Zentrierungsausnehmung auf der Rückseite des Anschlussmoduls 2 wird das Anschlussmodul 2 auf dem Gleichstrommotor 1 zentriert. Das Anschlussmodul 2 wird soweit auf den Motor 1 aufgesteckt, bis die Rückseite des Anschlussmoduls 2 auf dem Motorgehäuseboden 5 aufliegt. Das Anschlussmodul befindet sich noch im Montagezustand. Da der Durchmesser der Zentrierungsausnehmung des Anschlussmoduls 2 etwas größer ist als der Außendurchmesser des Lagers 7, kann das Anschlussmodul 2 im Montagezustand noch frei verdreht werden und somit in eine beliebige Position gebracht werden.

Das Anschlussmodul 2 wird nun so verdreht, bis die Bohrungen 12 oder andere an dem Anschlussmodul 2 ausgebildete Befestigungsmöglichkeit, beispielsweise eine Befestigungsrippe, die gewünschte Winkellage zu den elektrischen Anschlüssen 10 des Gleichstrommotors 1 oder zu den Befestigungsstellen an der Einbaustelle des Gleichstrommotors, aufweisen. Ist das Anschlussmodul 2 in der gewünschten Position, so wird das Anschlussmodul 2 fest mit dem Motorgehäuse 3 verbunden. Beispielsweise kann das Anschlussmodul 2 mit dem Motorgehäuse 3 verschweißt, verklebt, aufgepresst oder aufgeschrumpft werden. Motorgehäuse 3 und Anschlussmodul 2 befinden sich somit im montierten Zustand.

Die Gesamtlänge des Gleichstrommotors 1 mit dem Motorgehäuse 3 und dem daran angebrachten Anschlussmodul 2 entspricht ungefähr der Länge, die auch die bisher bekannten Gleichstromkleinmotoren ohne zusätzliche Adapterplatte aufweisen.

## Patentansprüche

1. Gleichstrommotor (1) mit einem Motorgehäuse (3) und mit mindestens einem an dem Motorgehäuse (3) anbringbaren Anschlussmodul (2), das Befestigungsmöglichkeiten zur Befestigung des Gleichstrommotors an einer Einbaustelle aufweist, wobei das Motorgehäuse (3) eine stirnseitige Zentrierungserhöhung aufweist, welche mit einer Zentrierungsausnehmung auf dem Anschlussmodul (2) zusammenwirkt, **dadurch gekennzeichnet, dass** das Anschlussmodul (2) in einem Montagezustand auf dem Motorgehäuse (3) frei in eine beliebige Position verdrehbar ist und im montierten Zustand in dieser beliebigen Position verdrehsicher mit dem Motorgehäuse (3) verbunden ist, wobei ein Lager (7) für die Motorwelle (8) des Gleichstrommotors (1) an der Stirnseite (5) des Motorgehäuses (3) angeordnet ist, zumindest teilweise über die Stirnseite (5) des Motorgehäuses (3) übersteht und die Zentrierungserhöhung ausbildet, wobei das Anschlussmodul (2) auf das Lager (7) aufgesteckt ist, und dass das Motorgehäuse (3) einen Motorgehäuseboden (5) aufweist, in dem ein Absatz (15) ausgebildet ist, und das Anschlussmodul (2) eine vorstehende Rippe (14) aufweist, die in dem Absatz (15) zu liegen kommt.

2. Gleichstrommotor nach Anspruch 1, **dadurch gekennzeichnet, dass** an der Stirnseite (5) des Motorgehäuses (3) ein von außen zugänglicher Lagersitz (6) ausgebildet ist, in dem das Lager (7) angeordnet ist, wobei die Höhe des Lagersitzes (6) kleiner ist als die Höhe des Lagers (7).

3. Gleichstrommotor nach mindestens einem der Ansprüche 1 oder 2, **dadurch gekennzeichnet, dass** das Anschlussmodul (2) durch Kleben, Schweißen oder ein umformendes Verfahren mit dem Motorgehäuse (3) verbunden ist.

4. Gleichstrommotor nach mindestens einem der Ansprüche 1 bis 3, **dadurch gekennzeichnet, dass** das Anschlussmodul (2) im montierten Zustand in einer präzisen Winkellage zu den elektrischen Anschlüssen (10) des Gleichstrommotors (1) angeordnet ist.

5. Gleichstrommotor nach mindestens einem der Ansprüche 1 bis 4, **dadurch gekennzeichnet, dass** das Anschlussmodul (2) ein Anschlussbohrbild (12) zur Verbindung mit einer Anschlussstelle aufweist.

## Claims

1. A DC motor (1) comprising a motor housing (3) and at least one connection module (2) adapted to be installed on the motor housing (3), the connection module having fastening options for fastening the DC motor to an installation place, wherein the motor housing (3) comprises a front-sided centering elevation which cooperates with a centering recess on the connection module (2), **characterized in that** the connection module (2) is freely rotatable into any desired position in a mounting state on the motor housing (3) and is non-rotatably connected to the motor housing (3) in this desired position in the mounted state, wherein a bearing (7) for the motor shaft (8) of the DC motor (1) is arranged on the front side (5) of the motor housing (3), projects at least in part beyond the front side (5) of the motor housing (3) and forms the centering elevation, wherein the connection module (2) is attached to the bearing (7), and that the motor housing (3) comprises a motor housing bottom (5) with a shoulder (15) formed therein, and the connection module (2) has a projecting rib (14) which comes to rest in the shoulder (15).

2. The DC motor according to claim 1, **characterized in that** the front side (5) of the motor housing (3) has formed thereon a bearing seat (6) which is accessible from the outside and has arranged therein the bearing (7), the height of the bearing seat (6) being smaller than the height of the bearing (7).

3. The DC motor according to at least one of claims 1 or 2, **characterized in that** the connection module (2) is connected by gluing, welding or a forming process to the motor housing (3).

4. The DC motor according to at least one of claims 1 to 3, **characterized in that** the connection module (2) in the mounted state is arranged in a precise angular position relative to the electrical connections (10) of the DC motor (1).

5. The DC motor according to at least one of claims 1 to 4, **characterized in that** the connection module (2) has a connection drill pattern (12) for connection to a connection point.

## Revendications

1. Moteur à courant continu (1) avec un carter de moteur (3) et avec au moins un module de raccordement (2) qui peut être fixé au carter de moteur (3) et qui présente des possibilités de fixation pour fixer le moteur à courant continu à un point de montage, le carter de moteur (3) présentant une élévation de centrage sur la face frontale, qui coopère avec un évidement de centrage sur le module de raccordement (2), **caractérisé en ce que** le module de raccordement (2), à l'état monté sur la carcasse du moteur (3), peut tourner librement dans n'importe quelle position et, à l'état monté, est relié à la carcasse du moteur (3) dans cette position arbitraire de manière à être bloqué en rotation, dans lequel un palier (7) pour l'arbre moteur (8) du moteur à courant continu (1) est disposé sur la face frontale (5) du carter du moteur (3), dépasse au moins partiellement de la face frontale (5) du carter du moteur (3) et forme la surélévation de centrage, le module de raccordement (2) étant enfiché sur le palier (7), et **en ce que** le carter du moteur (3) présente une base de carter de moteur (5) dans laquelle est formé un épaulement (15), et le module de raccordement (2) présente une nervure saillante (14) qui vient s'appuyer dans l'épaulement (15).

2. Moteur à courant continu selon la revendication 1, **caractérisé en ce qu'**un siège de palier (6) accessible de l'extérieur est formé sur la face frontale (5) du carter de moteur (3), dans lequel est disposé le palier (7), la hauteur du siège de palier (6) étant inférieure à la hauteur du palier (7).

3. Moteur à courant continu selon au moins l'une des revendications 1 ou 2, **caractérisé en ce que** le module de raccordement (2) est relié au carter du moteur (3) par collage, soudage ou un procédé de formage.

4. Moteur à courant continu selon au moins l'une des revendications 1 à 3, **caractérisé en ce que** le module de raccordement (2) est disposé à l'état monté dans une position angulaire précise par rapport aux connexions électriques (10) du moteur à courant continu (1).

5. Moteur à courant continu selon au moins l'une des revendications 1 à 4, **caractérisé en ce que** le module de raccordement (2) présente un schéma de trous de raccordement (12) pour le raccordement à un point de raccordement.
